# FASCICULE DE BREVET EUROPEEN

(11) **EP 1 057 564 B1**
(45) Date de publication et mention de la délivrance du brevet: **10.08.2005**
(21) Numéro de dépôt: 00440153.5
(22) Date de dépôt: 24.05.2000
(51) Int. Cl.: B23D 57/00, B28D 7/04, B28D 1/04, B23D 47/02, B23D 59/02

(54) **Dispositif de coupe-carreaux électrique portable sous forme d'une mallette**
Tragbare, elektrische Fliesenschneidvorrichtung in Form eines Koffers
Portable electrical tile cutting apparatus in shape of a suit case

(30) Priorité: 26.05.1999 FR 9906744
(43) Date de publication de la demande: 06.12.2000
(73) Titulaire: P.R.C.I. S.A., 34000 Montpellier (FR)
(72) Inventeur: Condomines, René, 34290 Bassan (FR)
(74) Mandataire: Rhein, Alain

(56) Documents cités:
- FR-A- 2 770 162
- GB-A- 2 303 820
- US-A- 4 976 251
- US-A- 5 797 488

## Description

La présente invention a pour objet un dispositif de coupe-carreaux électrique portatif.

Un coupe-carreaux électrique permet de couper des carreaux de carrelage ou analogue, il comporte essentiellement un caisson surmonté d'un plateau équipé d'éléments mobiles de guidage du carreau à couper, et un moyen de coupe qui consiste en un disque abrasif ou diamant animé en rotation par un moteur placé dans ledit caisson sous le plateau et dont une partie émerge de celui-ci, tandis qu'une autre partie barbote dans de l'eau que contient un récipient placé dans ledit caisson, le barbotage du disque facilite la coupe et élimine la production de poussière.

En outre, afin de pouvoir réaliser des coupes d'onglet, il est possible sur la plupart des coupe-carreaux existants soit d'incliner le plateau ou une partie de celui-ci, soit d'incliner le disque, l'inclinaison étant souvent limitée à un seul angle, à savoir 45°, pour réaliser une coupe dite "Jolly".

D'autre part, la plupart des coupe-carreaux existants sont à utiliser en association avec un récipient du type cuvette pour récupérer l'eau qui s'écoule du plateau lors de l'opération de coupe, écoulement qui est plus important lorsque le plateau est incliné.

De plus, même en utilisant une cuvette pour la récupération de l'eau, il est difficile avec les coupe-carreaux existants de ne pas projeter de l'eau tout autour de l'outil.

Par ailleurs, il est nécessaire de vérifier constamment le niveau d'eau dans le récipient du caisson, puisque l'eau évacuée dans la cuvette n'est pas réintégrée.

En outre, l'usage d'une cuvette constitue une contrainte de transport supplémentaire.

On connaît par le document FR 2.770.162 un dispositif de coupe-carreaux qui comporte d' une part un boîtier contenant le moteur et auquel est assujetti de manière réversible un bac amovible apte à être rempli d'eau ; et d'autre part un établi solidarisé audit boîtier avec possibilité de basculement, comprenant deux plateaux superposés, le plateau supérieur étant monté coulissant sur le plateau inférieur.

Un tel dispositif de coupe-carreaux est d'une conception relativement complexe, il est particulièrement destiné à l'usage des professionnels du bâtiment. Du fait de sa conception, il est lourd et encombrant, et sa mise en oeuvre nécessite de nombreuses opérations de montage, en sorte qu'il est plutôt destiné à demeurer installé un certain temps en un endroit réservé à cet effet.

Certains coupe-carreaux existants sont dits portatifs parce qu'ils comportent une ou plusieurs poignées rapportées sur le caisson, toutefois, du fait de leur encombrement, et généralement de leur poids, ils peuvent difficilement être transportés aisément.

On connaît ainsi le dispositif de coupe-carreaux décrit dans le document GB 2.303.820, qui est moins complexe et plus compact. Il comporte un corps en forme de bac, réalisé en matière plastique moulée, muni latéralement d'une poignée, renfermant un moteur équipé d'un disque de coupe, et surmonté d'un plateau métallique réalisé en deux parties amovibles. Ce dispositif comporte également une série de guides inclinés, aptes à être fixés et disposés au-dessus de l'une des deux parties du plateau afin de permettre la réalisation de coupes d'onglet en bordure d'un carreau, chacun des guides correspondant à un angle de coupe.

Outre l'inconvénient que la réalisation d'une coupe d'onglet nécessite de pratiquer préalablement une première coupe à 90° pour dimensionner le carreau puisque les guides ne permettent de réaliser des coupes d'onglet qu'en bordure, la nécessité de porter séparément la série de guides ne facilite pas le transport de ce dispositif de coupe-carreaux.

La présente invention a pour but de remédier aux divers inconvénients précités en proposant un dispositif de coupe-carreaux dont la conception en permet une utilisation aisée, et dont la compacité en facilite le transport.

Le dispositif de coupe-carreaux objet de la présente invention est du type comportant un plateau présentant une fente pour le passage d'une partie d'un disque de coupe mû en rotation par un moteur, ainsi qu'un élément mobile de guidage et des moyens permettant audit disque de barboter, et il se caractérise essentiellement en ce qu'il se présente sous la forme d'une mallette constituée du rapprochement deux coques, chacune monobloc, pourvues chacune en périphérie d'une lumière permettant, par le rapprochement desdites coques de créer une poignée, et dont l'une, la coque supérieure, présente une face plate constituant ledit plateau et est inclinable par rapport à l'autre, la coque inférieure, laquelle contient le moteur (40) d'entraînement du disque et présente un compartiment destiné à recevoir de l'eau ; et en ce que ladite face plate comporte également des moyens permettant la récupération de l'eau projetée lors de l'opération de coupe pour la diriger vers ledit compartiment.

Selon une caractéristique additionnelle du dispositif selon l'invention, les moyens de récupération de l'eau projetée consistent en deux rainures longitudinales percées d'orifices et qui bordent le plateau perpendiculairement au plan du disque de coupe, ainsi qu'entre lesdites rainures longitudinales, en une rainure intermédiaire, rectiligne ou courbe, également percée, et dont les extrémités débouchent toutes les deux dans l'une desdites rainures ou chacune dans l'une de ces dernières.

Selon une autre caractéristique additionnelle du dispositif selon l'invention, le compartiment destiné à contenir de l'eau est en forme de U pour être en regard des rainures longitudinales et du ou des percements de la rainure intermédiaire, et il entoure un compartiment étanche contenant le moteur.

Selon une autre caractéristique additionnelle du dispositif selon l'invention, la coque supérieure comporte, du côté du plateau destiné à être abaissé lors du basculement de celui-ci, inférieurement et transversalement, une paroi qui plonge dans le compartiment destiné à contenir de l'eau.

Selon une autre caractéristique additionnelle du dispositif selon l'invention, les rainures longitudinales permettent le coulissement d'un guide rectiligne qui y coulisse et peut y être bloqué par ses extrémités.

Selon une autre caractéristique additionnelle du dispositif selon l'invention, chacune des extrémités du guide comporte des moyens de coulissement dans une rainure longitudinale et un moyen de blocage apte à venir serrer une nervure longitudinale qui fait saillie dans ladite rainure, sous l'action d'un levier mobile en pivotement.

Selon une autre caractéristique additionnelle du dispositif selon l'invention, il comporte un moyen permettant de couvrir le disque pour éviter les projections d'eau lors du fonctionnement dudit disque, ledit moyen consistant en un capot mobile en déplacement vertical, et apte à être bloqué dans la position désirée.

Selon une autre caractéristique additionnelle du dispositif selon l'invention, le capot est muni à son extrémité libre d'un moyen de solidarisation à la coque supérieure en vue du transport.

Selon une autre caractéristique additionnelle du dispositif selon l'invention, la rainure intermédiaire est en forme d'arc de cercle passant autour de la fente de passage du disque, la partie intérieure audit arc consistant en une plaque de métal.

Avantageusement, les coques supérieure et inférieure viennent de moulage d'une matière plastique.

Les avantages et les caractéristiques de la présente invention ressortiront plus clairement de la description qui suit et qui se rapporte au dessin annexé, lequel en représente plusieurs modes de réalisation non limitatifs.

Dans le dessin annexé :
La figure 1 représente une vue schématique en perspective d'un dispositif de coupe carreaux selon l'invention.
La figure 2 représente une vue schématique en perspective du même dispositif dans une autre configuration.
La figure 3 représente une vue partielle en plan du même dispositif.
La figure 4 représente une vue partielle en coupe selon un plan vertical d'une partie du même dispositif.
La figure 5 représente une vue partielle en plan de l'intérieur du même dispositif.
La figure 6 représente une vue en coupe verticale selon l'axe XX' de la figure 3.
La figure 7 représente une vue en coupe verticale selon l'axe YY' de la figure 3.
La figure 8 représente une vue analogue à la figure 7, mais concernant une variante du dispositif selon l'invention.
La figure 9 représente une vue partielle en coupe selon un plan verticale d'une partie du dispositif selon l'invention.
La figure 10 représente une vue en 1 plan d'une variante du dispositif selon l'invention.

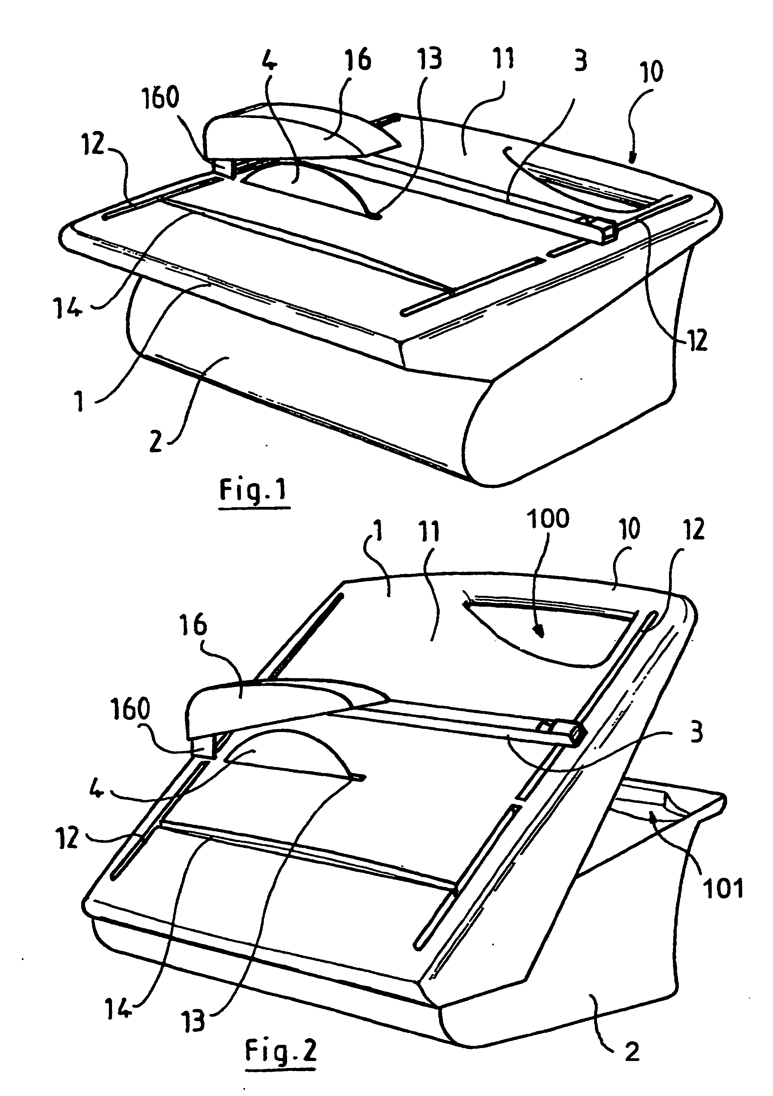

En référence à la figure 1. on peut voir qu'un dispositif de coupe-carreaux selon l'invention se présente sous la forme d'une mallette, il est ainsi constitué du rapprochement de deux coques, supérieure 1 et inférieure 2, chacune monobloc, venant de moulage d'une matière plastique et qui incorporent une poignée 10. On notera que la poignée 10 est créée par le rapprochement de deux lumières, respectivement 100 et 101, visibles sur la figure 2, que comportent les coques respectivement 1 et 2, ce qui permet notamment d'éviter lors du transport du dispositif une ouverture inopinée de celui-ci.

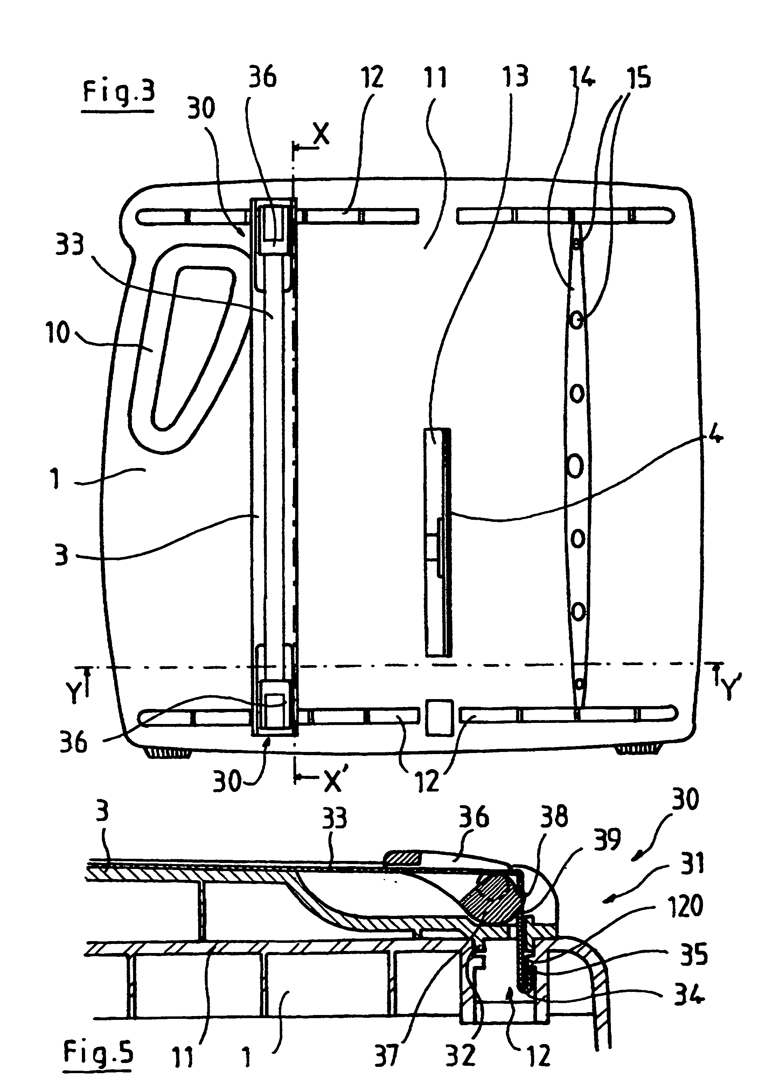

En référence également à la figure 3, on peut voir que la coque supérieure 1 présente une face plate 11 bordée latéralement de deux rainures 12 sans fond dans chacune desquelles peut se déplacer et être bloquée l'une des extrémités d'un guide 3. La coque supérieure 1 comporte également une fente transversale 13 de laquelle fait saillie une partie d'un disque de coupe 4, ainsi qu'une rainure transversale 14 percée d'orifices 15, visibles sur la figure 3, et qui débouche dans les rainures 12 non loin de l'une de leur extrémité du côté opposé à celui comportant la poignée 10.

L'utilisation du dispositif de coupe-carreaux selon l'invention est analogue à celui des coupe-carreaux existants, à savoir que le carreau à couper, non représenté, est placé à plat sur la face 11 de la coque supérieure 1 qui fait office de plateau, le guide 3, contre lequel l'opérateur va faire glisser le carreau à couper, est déplacé et bloqué dans la position correspondant à la largeur de la coupe à réaliser, puis le moteur, non visible, qui entraîne le disque 4 en rotation, est mis en marche.

Comme cela sera décrit plus loin, le disque 4 baigne en partie dans de l'eau, aussi pour éviter les projections, le disque 4 est surmonté d'un capot 16, non représenté sur la figure 3, qui rabat les projections sur la face 11 de la coque supérieure 1, sur laquelle l'eau s'écoule jusqu'aux rainures 12 et 14 pour en permettre une évacuation dans la coque inférieure 2.

On notera que le capot 16 est porté par une patte 160 d'épaisseur au plus égale à celle du disque 4 et positionnée dans le même plan que celui-ci, de manière à permettre le passage du carreau lors de la coupe de celui-ci.

Si on se réfère maintenant à la figure 2, on peut voir que la coque supérieure 1 peut être basculée à 45° par rapport à la coque inférieure 2, en relevant le côté comportant la lumière 100, tandis que le disque 4 demeure dans sa position initiale. Dans cette configuration il est possible de réaliser des coupes d'onglet, l'eau étant principalement évacuée par la rainure transversale 14.

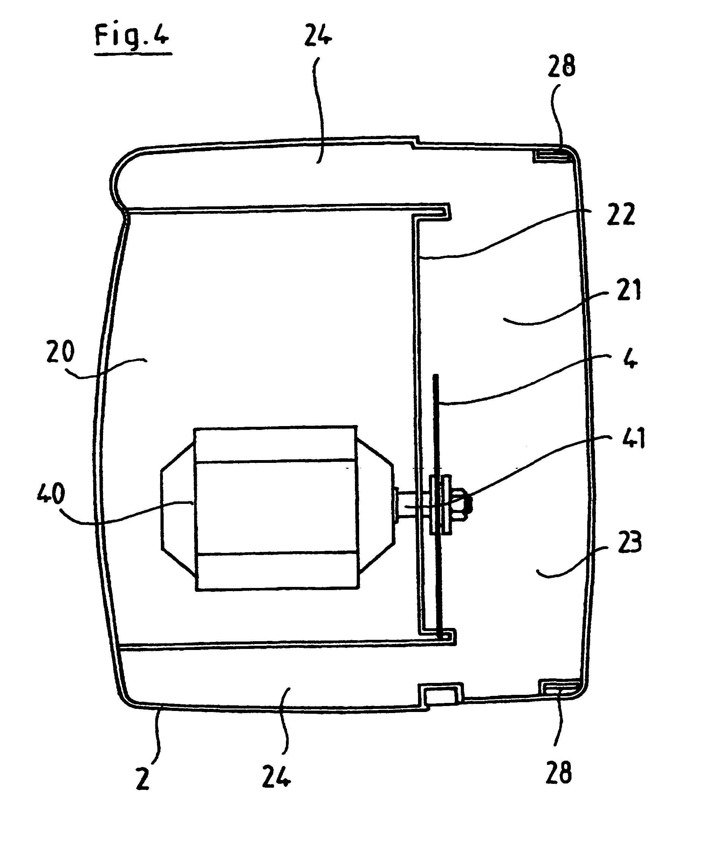

Si on se réfère maintenant à la figure 4, on peut voir que la coque inférieure 2 présente essentiellement deux compartiments 20 et 21 séparés par une paroi 22, le compartiment 20 contient le moteur 40 d'entraînement du disque 4 dont l'arbre 41 traverse de manière étanche la paroi 22, tandis que le compartiment 21 est destiné à contenir de l'eau et le disque 4.

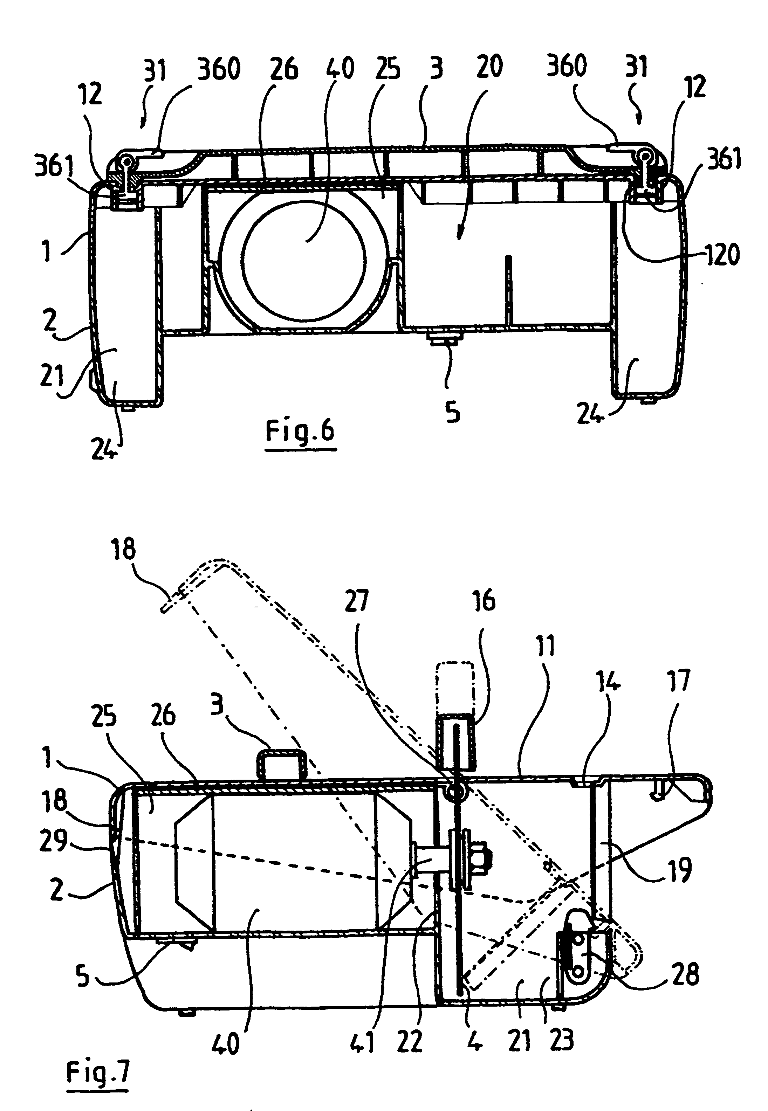

Le compartiment 21 est en forme de U, il comporte ainsi trois parties, une partie transversale 23 disposée en regard de la fente 13 et de la rainure 14, non visibles, et dans laquelle baigne une partie du disque 4, et deux parties longitudinales 24 en regard chacune de l'une des rainures 12 comme cela est également visible sur la figure 6. Ainsi, l'eau qui passe par les rainures 12, 13 et 14 s'écoule dans le compartiment 21.

En référence à la figure 5, on peut voir que le guide 3 est équipé à chacune de ses extrémités 30, dont une seule est représentée, d'un système 31 permettant de bloquer le guide 3 dans la position voulue dans les rainures 12.

Dans le mode de réalisation représenté, l'extrémité 30 comporte inférieurement un moyen 32 de guidage en coulissement dans la rainure 12, tandis que le guide 3 renferme une bride 33, qui consiste en une bande de métal, de préférence en acier inoxydable, qui s'étend entre les extrémités 30, et qui est, au niveau de chacune de celles-ci, pliée sensiblement à angle droit pour pénétrer dans une rainure 12. Chacune des extrémités 34 de la bride 33 est repliée vers l'extérieur de manière qu'un déplacement vertical de bas en haut de cette extrémité 34 permette, en vue du blocage de l'extrémité 30, de mettre en contact le bord extrême 35 de la bride 33, qui de préférence est cranté, avec le bord inférieur d'une nervure longitudinale 120 qui fait saillie horizontalement dans la rainure longitudinale. Le déplacement vers le haut d'une extrémité 34 est réalisé au moyen d'un levier 36 muni d'une partie 37 excentrique de blocage en rotation, ainsi que d'un ergot 38 engagé dans une lumière 39 pratiquée la partie extrême de la bride 33.

On notera que le système de blocage 31 peut être réalisé de plusieurs manières, ainsi sur la figure 6 on peut voir qu'il comporte un levier 360 avec excentrique dont le manoeuvrement permet de déplacer un élément de butée 361 pour venir ou non au contact de la nervure 120.

Sur cette figure 6, on peut voir également que dans le compartiment 20, le moteur 40 est maintenu isolé dans un compartiment 25 lui-même fermé supérieurement par un couvercle 26 pour éviter tout contact avec l'eau, seules demeurant des ouvertures de ventilation, non visibles.

Si on se réfère maintenant à la figure 7, on peut voir que la coque supérieure 1 s'articule sur deux axes 27, dont un seul est visible sur la figure, solidaires de la coque inférieure 2.

La position à 45° est maintenue par l'intermédiaire de deux crochets 17, dont un seul est visible, qui font saillie de la face inférieure de la coque supérieure 1 du côté opposé à celui comportant la poignée 10, et qui sont destinés à coopérer avec des moyens d'accrochage mobiles 28, visibles également sur la figure 4, solidaires de la coque inférieure 2 et manoeuvrables manuellement pour leur désengagement.

De même, lorsque la coque supérieure 1 est refermée sur la coque inférieure 2, elle y est maintenue par l'intermédiaire d'une patte flexible 18 solidaire de la coque supérieure 1 du côté de la poignée 10, et dont l'extrémité est susceptible de pénétrer dans une ouverture 29 pratiquée dans la coque inférieure 2.

Sur la figure 7, on peut voir également que la coque supérieure 1 comporte inférieurement et transversalement une paroi 19 qui longe extérieurement la rainure 14, et qui sert à diriger vers le compartiment 21 l'eau qui s'écoule par la rainure 14, notamment lorsque la coque supérieure 1 est basculée à 45°.

La paroi 19 a également pour fonction de détourner l'eau pour le vidage du compartiment 21, en effet, pour vider ce dernier, il suffit, alors que la coque supérieure 1 est fermée sur la coque inférieure 2, de prendre le coupe carreaux selon l'invention par la poignée 10 et de le soulever, l'eau contenue dans le compartiment s'écoulant alors entre les coques supérieure 1 et inférieure 2 le long du bord extrême de la paroi 19.

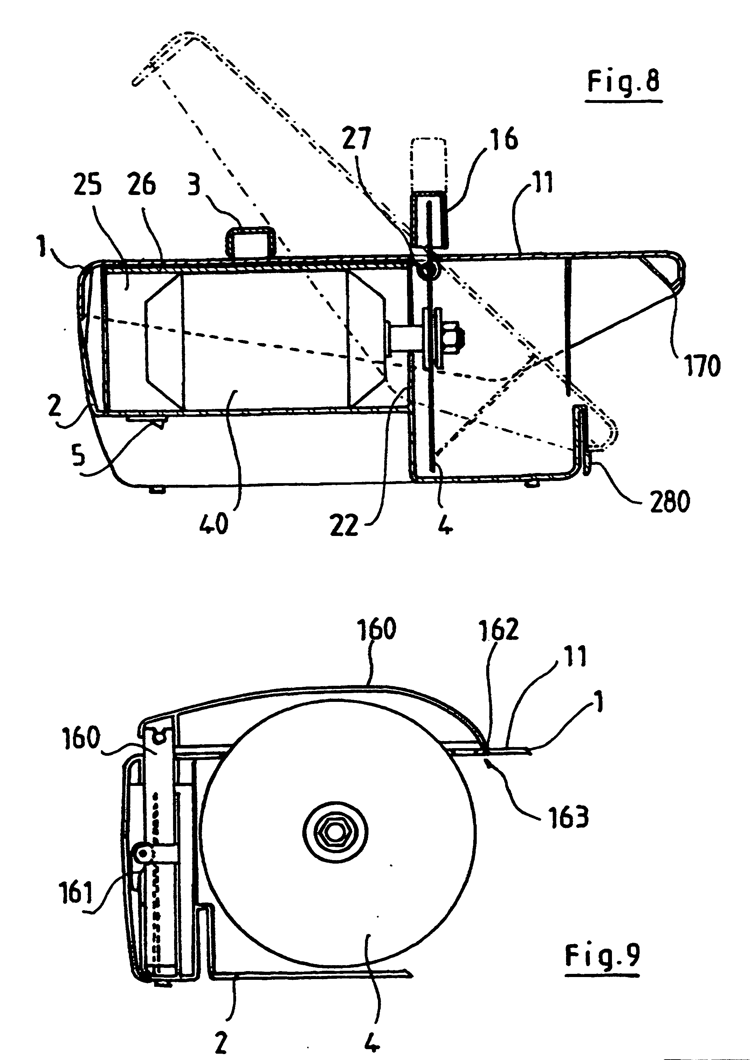

En référence à la figure 8, on peut voir une variante du moyen de blocage en position inclinée de la coque supérieure 1, il consiste en une patte flexible 280 sur laquelle peut venir s'encliqueter le bord inférieur extrême 170 de la coque supérieure 1, le désencliquetage étant réalisé par pression sur la patte flexible 280.

On notera sur les figures 7 et 8 qu'un interrupteur marche/arrêt 5 de commande du moteur 40 est placé sous le compartiment 20, de manière à être facilement accessible tout en étant protégé des projections d'eau.

Par ailleurs, lorsque la coque supérieure 1 est inclinée à 45° il est nécessaire que le capot 16 soit relevé, celui-ci est donc est mobile en translation verticale par le coulissement de la patte 160 qui porte le capot 16 et qui comporte un moyen de blocage en position, représenté sur la figure 9.

La patte 160 est de préférence réalisée en métal, elle est engagée dans une rainure tandis qu'un levier 161 manoeuvrable en pivotement peut, par l'intermédiaire d'une partie excentrique, venir bloquer la patte 160 dans une position donnée.

On peut également voir que la figure 9 que l'extrémité libre du capot 16 présente un ergot 162 destiné à être introduit dans une lumière 163 pratiquée dans la face 11 de la coque supérieure 1, de manière à permettre l'immobilisation du capot 16 lors du transport.

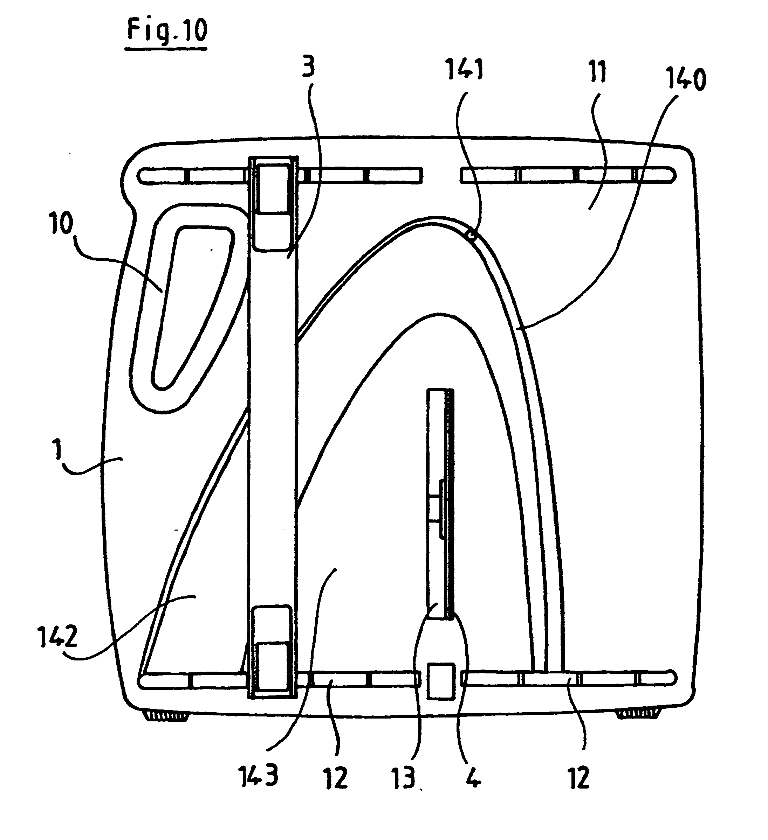

Si on se réfère maintenant à la figure 10, on peut voir que dans une variante, la rainure transversale 14 peut être remplacée par une rainure 140 qui décrit un arc de cercle autour de la fente transversale 13 pour déboucher par ses extrémités dans l'une des rainures longitudinales 12. Cette rainure courbe 140 est percée d'un orifice 141 pour l'écoulement de l'eau résiduelle dans le compartiment 21, non visible. Bien entendu il est possible que la rainure courbe 140 comporte plusieurs orifices, à condition toutefois qu'ils soient bien en regard du compartiment 21.

La partie interne à l'arc de cercle formé par la rainure courbe 140 présente deux parties, une partie 142 en forme de bande qui longe la rainure courbe 140 qui peut être réalisée dans un matériau antidérapant du type caoutchouc, et une partie 143 qui englobe la fente 13, réalisée en métal, en acier inoxydable de préférence, destinée à pallier l'usure de la face 11.

Le dispositif de coupe-carreaux selon l'invention, tel que décrit précédemment est d'une utilisation aisée et propre, de plus il est facilement transportable.

On notera à cet effet que la poignée 10 n'est pas orientée parallèlement au plan du disque 4, mais légèrement inclinée de manière que sa perpendiculaire passe par le centre de gravité du coupe-carreaux.

## Revendications

1. Dispositif de coupe-carreaux du type comportant un plateau présentant une fente pour le passage d'une partie d'un disque de coupe mû en rotation par un moteur, ainsi qu'un élément mobile de guidage et des moyens permettant audit disque de barboter, et **caractérisé en ce qu'**il se présente sous la forme d'une mallette constituée du rapprochement de deux coques (1, 2), chacune monobloc, pourvues chacune en périphérie d'une lumière (100, 101) permettant, par le rapprochement desdites coques (1, 2) de créer une poignée (10), et dont l'une, la coque supérieure (1), présente une face plate (11) constituant ledit plateau et est inclinable par rapport à l'autre, la coque inférieure (2), laquelle contient le moteur (40) d'entraînement du disque et présente un compartiment (21) destiné à recevoir de l'eau, et **en ce que** ladite face plate (11) comporte également des moyens (12, 14; 140) permettant la récupération de l'eau projetée lors de l'opération de coupe pour la diriger vers ledit compartiment (21).

2. Dispositif selon la revendication 1, **caractérisé en ce que** les moyens de récupération de l'eau projetée consistent en deux rainures longitudinales (12) percées d'orifices (15) et qui bordent le plateau perpendiculairement au plan du disque de coupe (4), ainsi qu'entre lesdites rainures longitudinales (12), en une rainure intermédiaire (14; 140), rectiligne ou courbe, également percée, et dont les extrémités débouchent toutes les deux dans l'une desdites rainures (12) ou chacune dans l'une de ces dernières.

3. Dispositif selon la revendication 1 ou la revendication 2, **caractérisé en ce que** le compartiment (21) destiné à contenir de l'eau est en forme de U pour être en regard des rainures longitudinales (12) et du ou des percements de la rainure intermédiaire (14; 140), et il entoure un compartiment étanche (25) contenant le moteur.

4. Dispositif selon l'une quelconque des revendications précédentes, **caractérisé en ce que** la coque supérieure (1) comporte, du côté du plateau destiné à être abaissé lors du basculement de celui-ci, inférieurement et transversalement, une paroi (19) qui plonge dans le compartiment (21) destiné à contenir de l'eau.

5. Dispositif selon l'une quelconque des revendications 2 à 4, **caractérisé en ce que** les rainures longitudinales (12) permettent le coulissement d'un guide rectiligne (3) qui y coulisse et peut y être bloqué par ses extrémités (30).

6. Dispositif selon la revendication 5, **caractérisé en ce que** chacune des extrémités (30) du guide (3) comporte des moyens (32) de coulissement dans une rainure longitudinale (12) et un moyen de blocage (33, 34, 35; 361) apte à venir serrer une nervure longitudinale (120) qui fait saillie dans ladite rainure (12), sous l'action d'un levier (360; 360) mobile en pivotement.

7. Dispositif selon l'une quelconque des revendications précédentes, **caractérisé en ce qu'**il comporte un moyen permettant de couvrir le disque (4) pour éviter les projections d'eau lors du fonctionnement dudit disque (4), ledit moyen consistant en un capot (16) mobile en déplacement vertical, et apte à être bloqué dans la position désirée.

8. Dispositif selon la revendication 7, **caractérisé en ce que** le capot (16) est muni à son extrémité libre d'un moyen (162) de solidarisation à la coque supérieure (1) en vue du transport.

9. Dispositif selon l'une quelconque des revendications 2 à 8, **caractérisé en ce que** la rainure intermédiaire (140) est en forme d'arc de cercle passant autour de le fente (13) de passage du disque (4), la partie (143) intérieure audit arc consistant en une plaque de métal.

10. Dispositif selon l'une quelconque des revendications précédentes, **caractérisé en ce que** les coques supérieure (1) et inférieure (2) viennent de moulage d'une matière plastique.

## Patentansprüche

1. Fliesenschneidvorrichtung der Art umfassend eine Platte, aufweisend einen Spalt für den Durchgang eines Teiles einer Schneidscheibe, die durch einen Motor in Drehung angetrieben wird, sowie ein bewegliches Führungsglied und die Mittel, die der besagten Scheibe erlauben, zu durchblasen, und **dadurch gekennzeichnet, daß** sie als ein Koffer ausgestaltet ist, der durch die Annäherung von zwei, jeweils einstückig gefertigten Rümpfen (1, 2) gebildet ist, die jeweils auf dem Umkreis mit einer Öffnung (100, 101) versehen sind, erlaubend, durch die Annäherung der besagten Rümpfe (1, 2) einen Handgriff (10) zu schaffen, und von denen der eine, der obere Rumpf (1), eine flache Seite (11) aufweist, die die besagte Platte bildet, und hinsichtlich des anderen, des unteren Rumpfs (2), neigbar ist, welcher den Antriebsmotor (40) für die Scheibe enthält und eine Abteilung (21) aufweist, vorgesehen, das Wasser aufzunehmen, und daß die besagte flache Seite (11) ebenfalls Mittel (12, 14; 140) umfaßt, die die Rückgewinnung des bei dem Schneidvorgang geschleuderten Wassers erlauben, um es in Richtung auf die besagte Abteilung (21) zu lenken.

2. Vorrichtung nach Anspruch 1, **dadurch gekennzeichnet, daß** die Mittel zur Rückgewinnung des geschleuderten Wassers aus zwei Längsrillen (12), die von Öffnungen (15) durchbohrt sind, bestehen und an der Platte lotrecht zu der Ebene der Schneidscheibe (4) angrenzend sind, sowie, zwischen den besagten Längsrillen (12), aus einer geradlinigen oder gebogenen, ebenfalls durchbohrten Zwischenrille (14; 140), und deren beide Enden in einer der besagten Rillen (12) oder jeweils in einer von diesen Letzteren münden.

3. Vorrichtung nach Anspruch 1 oder Anspruch 2, **dadurch gekennzeichnet, daß** die Abteilung (21), vorgesehen, um das Wasser zu enthalten, U-förmig ausgestaltet ist, um den Längsrillen (12) und der oder den Durchbohrungen der Zwischenrille (14; 140) gegenüberstehend zu sein, und sie umschließt eine wasserdichte Abteilung (25), die den Motor enthält.

4. Vorrichtung nach irgendeinem der vorgehenden Ansprüche, **dadurch gekennzeichnet, daß** der obere Rumpf (1) von der Seite der Platte, der vorgesehen ist, um beim Schwenken desselben herabgesetzt zu werden, unten und quer eine Wand (19) umfaßt, die in die Abteilung (21) taucht, die vorgesehen ist, das Wasser zu enthalten.

5. Vorrichtung nach irgendeinem der Ansprüche 2 bis 4, **dadurch gekennzeichnet, daß** die Längsrillen (12) das Gleiten einer geradlinigen Führung (3) erlauben, die darin gleitet und durch ihre Enden (30) darin blockiert werden kann.

6. Vorrichtung nach Anspruch 5, **dadurch gekennzeichnet, daß** jedes der Enden (30) der Führung (3) Mittel (32) zum Gleiten in einer Längsrille (12) und ein Blockiermittel (33, 34, 35 ; 361) umfaßt, geeignet, eine Längsrippe (120), die in der besagten Rille (12) vorspringt, unter der Wirkung eines Hebels (360; 360) zu drücken, der in Drehung beweglich ist.

7. Vorrichtung nach irgendeinem der vorgehenden Ansprüche, **dadurch gekennzeichnet, daß** sie ein Mittel umfaßt, erlaubend, die Scheibe (4) zu decken, um Schleudern des Wassers bei dem Funktionieren der besagten Scheibe (4) zu vermeiden, wobei das besagte Mittel aus einer Haube (16) besteht, die in vertikaler Verschiebung beweglich und geeignet ist, in der gewünschten Position gesperrt zu werden.

8. Vorrichtung nach Anspruch 7, **dadurch gekennzeichnet, daß** die Haube (16) an ihrem freien Ende mit einem Mittel (162) zur Befestigung am oberen Rumpf (1) angesichts des Transportes ausgestattet ist.

9. Vorrichtung nach irgendeinem der Ansprüche 2 bis 8, **dadurch gekennzeichnet, daß** die Zwischenrille (140) als Kreisbogen ausgestaltet ist, der um den Spalt (13) zum Durchgang der Scheibe (4) herum durchgeht, wobei der innere Teil (143) des besagten Bogens aus einer Metallplatte besteht.

10. Vorrichtung nach irgendeinem der vorgehenden Ansprüche, **dadurch gekennzeichnet, daß** der obere Rumpf (1) und der untere Rumpf (2) durch Formung eines Kunststoffs hergestellt ist.

## Claims

1. Tile-cutting device of the type comprising a plate having a slot for the passing through of a portion of a cutting disc driven in rotation by a motor, as well as a mobile guiding member and means allowing said disc to bubble, and **characterised in that** it is in the form of a suite case formed through nearing two shells (1, 2) to each other, each of them being solid, each provided on its periphery with an opening (100, 101) allowing, through nearing said shells (1, 2) to each other, to create a handle (10), and one of which, the upper shell (1), has a planar face (11) forming said plate and can be tilted with respect to the other one, the lower shell (2), which contains the driving motor (40) for the disc and has a compartment (21) for receiving water, and **in that** said planar face (11) also comprises means (12, 14 ; 140) allowing to recover the water projected during the cutting operation, in order to direct it towards said compartment (21).

2. Device according to claim 1, **characterised in that** the means for recovering the projected water consist of two longitudinal grooves (12) drilled with holes (15) and which edge the plate perpendicularly to the plane of the cutting disc (4), as well as between said longitudinal grooves (12), of a rectilinear or curved intermediate groove (14; 140), also drilled, and the ends of which both emerge into one of said grooves (12) or each one into one of the latter.

3. Device according to claim 1 or claim 2, **characterised in that** the compartment (21) aimed at containing water is U-shaped, in order to be located in front of the longitudinal grooves (12) and of the hole or holes drilled in the intermediate groove (14; 140), and it surrounds a tight compartment (25) containing the motor.

4. Device according to any of the preceding claims, **characterised in that** the upper shell (1) comprises, on the side of the plate aimed at being lowered during its tilting, at the lower portion and transversely, a wall (19) which plunges into the compartment (21) aimed at containing water.

5. Device according to any of claims 2 to 4, **characterised in that** the longitudinal grooves (12) allow a rectilinear guide (3) to slide in them and to be locked in them by its ends (30).

6. Device according to claim 5, **characterised in that** each one of the ends (30) of the guide (3) comprises means (32) for sliding in a longitudinal groove (12) and locking means (33, 34, 35; 361) capable of tightening a longitudinal rib (120) which protrudes into said groove (12), under the action of a pivotally mobile lever (360 ; 360).

7. Device according to any of the preceding claims, **characterised in that** it comprises means allowing to cover the disc (4), in order to avoid water splashes during the operation of said disc (4), said means consisting of a cover (16) which can move vertically, and capable of being locked in the desired position.

8. Device according to claim 7, **characterised in that** the cover (16) is provided, at its free end, with means (162) for making it integral with the upper shell (1) for transportation.

9. Device according to any of claims 2 to 8, **characterised in that** the intermediate groove (140) is in the form of an arch of a circle passing around the slot (13) for the passing through of the disc (4), the portion (143) inside said arch consisting of a metal plate.

10. Device according to any of the preceding claims, **characterised in that** the upper (1) and lower (2) shells are made by moulding of plastic material
